(19) Europäisches Patentamt / European Patent Office / Office européen des brevets

(11) **EP 3 054 168 B1**

(12) **FASCICULE DE BREVET EUROPEEN**

(45) Date de publication et mention
de la délivrance du brevet:
**13.12.2017   Bulletin 2017/50**

(51) Int Cl.:
*F04D 29/52* *(2006.01)*      *F04D 29/70* *(2006.01)*

(21) Numéro de dépôt: **16154250.1**

(22) Date de dépôt: **04.02.2016**

(54) **DISPOSITIF DE MISE EN CIRCULATION D'UN GAZ DANS UN CIRCUIT FERME**

VORRICHTUNG ZUM EINSPEISEN EINES GASES IN EINEN GESCHLOSSENEN KREISLAUF

DEVICE FOR CIRCULATING A GAS IN A CLOSED CIRCUIT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:   **09.02.2015   FR 1550987**

(43) Date de publication de la demande:
**10.08.2016   Bulletin 2016/32**

(73) Titulaire: **COMMISSARIAT À L'ÉNERGIE
ATOMIQUE ET AUX
ÉNERGIES ALTERNATIVES
75015 Paris (FR)**

(72) Inventeurs:
• **ATTIE, David
  75017 PARIS (FR)**
• **MAGNIER, Patrick
  91400 ORSAY (FR)**

(74) Mandataire: **Cabinet Camus Lebkiri
25 rue de Maubeuge
75009 Paris (FR)**

(56) Documents cités:
**WO-A2-2014/204412      US-A- 5 187 938
US-A1- 2005 022 549**

**Description**

## DOMAINE TECHNIQUE

La présente invention concerne un dispositif de mise en circulation d'un gaz dans un circuit fermé, en vue par exemple de le filtrer ou de le purifier. Un tel dispositif, utilisé pour la circulation de l'hélium, est décrit dans le brevet US 5 187 938.

## ETAT DE LA TECHNIQUE

Dans un circuit fermé, i.e. étanche par rapport à l'extérieur, un gaz est généralement mis en mouvement au moyen d'une pompe électrique pouvant coopérer avec un réservoir.

Or dans certaines applications particulières nécessitant un système fiable, compact et de faible consommation électrique, telles que par exemple pour la filtration d'une chambre d'un satellite, l'utilisation de ce type de pompe lourde (plusieurs dizaines de kilos), encombrante et consommatrice d'énergie électrique n'est absolument pas adaptée.

## EXPOSE DE L'INVENTION

Dans ce contexte, la présente invention vise à proposer un dispositif de mise en circulation d'un gaz dans un circuit fermé compact, léger, propre et de faible consommation électrique pouvant par exemple être utilisé dans des applications aérospatiales, notamment pour la filtration ou la purification de chambre et de réservoir.

A cette fin, l'invention propose un dispositif de mise en circulation d'un gaz dans un circuit fermé, ledit dispositif présentant une première extrémité amont et une deuxième extrémité aval adaptées pour être raccordées au circuit ; ledit dispositif étant caractérisé en ce qu'il comporte :

- une première chambre (A) définissant un premier volume interne et présentant une forme au moins partiellement conique présentant un diamètre minimum situé au niveau de ladite extrémité amont raccordée au dit circuit ;
- une deuxième chambre (B) définissant un deuxième volume interne, ladite deuxième chambre (B) étant positionnée en aval de ladite première chambre (A) et présentant une forme au moins partiellement conique présentant un diamètre minimum situé au niveau de ladite extrémité aval raccordée au dit circuit ;
- une hélice comportant plusieurs pales disposées régulièrement autour d'un axe de rotation ; ladite hélice étant positionnée entre ladite première chambre (A) et ladite deuxième chambre (B) ;
- des moyens de mise en rotation dudit axe de rotation mettant en mouvement ladite hélice ;

le volume interne de la première chambre (A) étant plus grand que le volume interne de la deuxième chambre (B) ;
la forme conique de la première chambre (A) est caractérisée par un angle ($\alpha_A$) et la forme conique de la deuxième chambre (B) est caractérisée par un angle ($\alpha_B$), l'angle ($\alpha_A$) de la forme conique de la première chambre (A) étant inférieur à l'angle ($\alpha_B$) de la forme conique de la deuxième chambre (B).

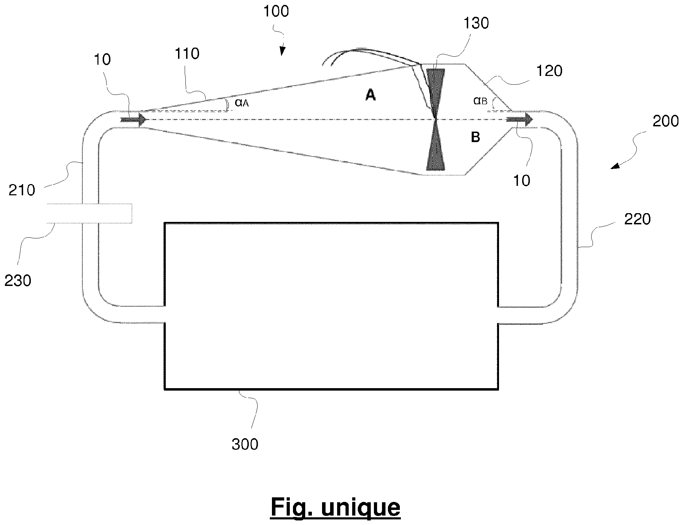

On notera que les termes « amont » et « aval » sont définis en fonction du sens d'écoulement du gaz à l'intérieur du circuit illustré à la figure 1 par les références 10.

Ainsi, le dispositif selon l'invention permet de s'affranchir de l'utilisation d'une pompe pour permettre la circulation d'un gaz dans un circuit fermé.

Ainsi grâce à l'invention, il est possible de réaliser un système de filtration fermé propre, compact, économique et de faible consommation électrique par rapport aux systèmes de filtration existant utilisant une pompe pour la mise en mouvement du gaz emprisonné dans le circuit.

Le dispositif de mise en circulation d'un gaz dans un circuit fermé selon l'invention peut également présenter une ou plusieurs des caractéristiques ci-dessous, considérées individuellement ou selon toutes les combinaisons techniquement possibles :

- le rapport entre le volume interne de la première chambre (A) et le volume interne de la deuxième chambre (B) est supérieur ou égal à 2 ;

- les moyens de mise en rotation de ladite hélice sont formés par un moteur électrique basse tension ;

- les moyens de mise en rotation de ladite hélice sont positionnés dans le volume interne dudit dispositif.

L'invention a également pour objet un système de filtration d'un gaz d'un circuit fermé, ledit système étant caractérisé en ce qu'il comporte :

- un dispositif de mise en circulation dudit gaz selon l'invention ;
- une chambre comportant un volume de gaz à filtrer ;
- des tuyauteries de raccord permettant de raccorder ladite chambre au dispositif de mise en circulation ;
- un moyen de filtration adapté pour filtrer le gaz du circuit.

Avantageusement, le moyen de filtration est un filtre permanent adapté pour filtrer le gaz dudit circuit.

## BREVES DESCRIPTIONS DES FIGURES

D'autres caractéristiques et avantages de l'invention ressortiront plus clairement de la description qui en est donnée ci-dessous, à titre indicatif et nullement limitatif, en référence à la figure unique illustrant schématiquement le dispositif de mise en circulation d'un gaz dans un circuit fermé selon l'invention.

## DESCRIPTION D'AU MOINS UN MODE DE REALISATION

La figure unique illustre un circuit fermé 200 dans lequel un gaz est mis en mouvement par un dispositif de mise en circulation 100 selon l'invention.

Le circuit de filtration 200 comporte ;

- un dispositif 100 de mise en circulation d'un gaz ;
- une chambre 300 présentant un volume de gaz à filtrer ou à purifier ;
- des tuyauteries 210, 220 pour raccorder la chambre 300 au dispositif de circulation 100 ; les tuyauteries 210, 220 sont raccordées au dispositif de mise en circulation 100 de manière classique, typiquement par des liaisons soudées ;
- un moyen de filtration 230.

Le dispositif 100 de mise en circulation selon l'invention est formé par deux coques 110, 120 en acier inoxydable résistant au vide et à la très haute pression, c'est-à-dire au moins jusqu'à 200 bars. Les deux coques 110, 120 sont assemblées ensemble par des moyens ad hoc formés par exemple par un ensemble de viroles et de boulons de serrage, de sorte que la liaison soit étanche et résiste aux pressions requises. Les deux coques 110, 120 délimitent ainsi l'enveloppe extérieure du dispositif 100.

Les deux coques 110,120 assemblées délimitent :

- une première chambre interne A définissant un premier volume interne illustrée sur la figure 1 ;
- une deuxième chambre interne B définissant un deuxième volume interne illustrée à la figure 1.

Avantageusement, la première chambre A du dispositif 100 présente un volume intérieur supérieur au volume interne de la deuxième chambre B. Cette différence de volume permet ainsi de faciliter la création d'une différence de pression dans le circuit pour l'amorçage et l'entretien de la circulation du gaz dans le circuit.

Avantageusement, le rapport entre le volume de la première chambre A et de la deuxième chambre B est supérieur ou égal à deux.

La chambre A et la chambre B définissent un volume interne global dont la géométrie est optimisée pour faciliter la circulation des gaz entre le dispositif 100 et les tuyauteries de raccord 210, 220. Ainsi, la chambre A est de forme essentiellement conique présentant un petit diamètre et un grand diamètre, le petit diamètre étant positionné au niveau de la tuyauterie amont 210. La chambre B est également de forme partiellement conique présentant un petit diamètre et un grand diamètre, le petit diamètre étant positionné au niveau de la tuyauterie aval 220.

Afin de faciliter l'écoulement du gaz dans le dispositif de mise en circulation 100 et de manière à minimiser les pertes de charge par frottement sur les parois intérieures des deux coques 110, 120, la géométrie des volumes internes du dispositif est adaptée de manière à obtenir un régime le moins turbulent possible. Pour cela, les dimensions et la forme du dispositif 100 seront adaptées de manière à minimiser les frottements et de manière à obtenir un écoulement à l'intérieur du dispositif 100 caractérisé par un nombre de Reynolds le plus faible possible, et idéalement inférieur à 3000.

On rappelle que le nombre de Reynolds est donné par la formule suivante :

$$R_e = \frac{\rho . V . D}{\mu}$$

avec :

- $V$ : vitesse caractéristique du fluide (m/s)
- $\rho$ : masse volumique du fluide (kg/m$^3$)
- $D$ : le diamètre d'entrée ou de sortie du dispositif (m)
- $\mu$ : viscosité dynamique du fluide (kg/(m.s))

Ainsi dans un mode de réalisation visant à optimiser la viscosité cinématique, le cône d'entrée du dispositif 100 formé par la première chambre A présente un angle $\alpha_A$ inférieur à 10°, et le cône de sortie du dispositif 100 formé par la deuxième chambre B présente un angle $\alpha_B$ de l'ordre de 40°.

Dans un second mode de réalisation visant à maximiser la vitesse d'écoulement, on cherchera à minimiser le diamètre d'entrée et de sortie du dispositif 100.

Le dispositif 100 comporte en outre un dispositif à hélice 130 comportant une pluralité de pales mises en mouvement par un moteur électrique basse tension (non représenté). A cet effet, il est prévu que le dispositif 100 comporte, au niveau de l'une de ces deux coques 110, 120, une traversée de cloison étanche au vide et à la pression requise pour le passage des câbles d'alimentation en basse tension du moteur électrique. Avantageusement, le moteur électrique est alimenté par une alimentation basse tension de l'ordre de 3 à 12 volts.

Selon un mode de réalisation avantageux de l'invention le moteur électrique est emprisonné dans un carter étanche de manière à minimiser la pollution du flux d'air traversant le dispositif 100.

Le dispositif à hélices 130 est positionné entre la première chambre A et la deuxième chambre B dans une zone intermédiaire située entre les deux parties coniques des deux chambres A et B. Au niveau du positionnement de l'hélice 130, l'enveloppe externe du dispositif 100 présente une forme sensiblement cylindrique de manière à permettre le positionnement et la rotation du dispositif à hélices 130.

Il est bien entendu prévu de dimensionner le dispositif 100 selon l'invention de manière à ce que les extrémités radiales des pales de l'hélice 130 viennent lécher la paroi intérieure de l'enveloppe du dispositif 100 de manière à minimiser la présence de volume mort dans le dispositif 100.

Avantageusement, le dispositif 100 est dimensionné de manière à ce que le diamètre extérieur de l'hélice 130 soit supérieur au diamètre des tubes de raccord du circuit.

Selon un mode de réalisation cherchant à maximiser la vitesse d'écoulement du gaz, on cherchera à maximiser la diamètre de l'hélice 130.

Le dispositif 100 de mise en circulation d'un gaz selon l'invention permet d'être intégré dans un circuit fermé, tel que par exemple un circuit de filtration ou de purification d'une chambre 300. Dans ce cas, le circuit présente un élément de filtration 230. Avantageusement, l'élément de filtration 230 est un filtre permanent positionné en entrée ou en sortie de la chambre 300 à filtrer ou à purifier.

Le dispositif 100 est réalisé avec des matériaux sélectionnés et choisis en fonction du type d'application. Avantageusement, les matériaux utilisés ont la propriété d'être inerte au contact du gaz du circuit de manière à éviter toute pollution inutile du gaz.

De manière à optimiser davantage la différence de pression à l'intérieur du circuit fermé et de manière à augmenter la vitesse d'écoulement du gaz dans le circuit, il est également envisagé d'utiliser des moyens de chauffage et/ou de refroidissement du gaz circulant à l'intérieur du circuit fermé de manière à créer une circulation naturelle du gaz par convection en complément de la mise en circulation du gaz créée par le dispositif selon l'invention. Ces moyens de chauffage et/ou refroidissement du gaz peuvent être intégrés au dispositif 100 ou positionnés sur des tuyauteries de raccord du circuit. Toutefois, ces moyens de chauffage et/ou refroidissement du gaz seront utilisés principalement pour des applications nécessitant une vitesse d'écoulement et une efficacité importantes, les moyens de chauffage et/ ou de refroidissement étant consommateurs d'énergie électrique, le dispositif 100 selon l'invention cherchant au contraire à minimiser l'apport électrique nécessaire pour réaliser une fonction de filtration d'une chambre étanche.

**Revendications**

1. Dispositif (100) de mise en circulation d'un gaz dans un circuit fermé (200), ledit dispositif (100) présentant une première extrémité amont et une deuxième extrémité aval adaptées pour être raccordées au dit circuit (200) ; ledit dispositif comportant :

   - une première chambre (A) définissant un premier volume interne et présentant une forme au moins partiellement conique présentant un diamètre minimum situé au niveau de ladite extrémité amont raccordée au dit circuit (200) ;
   - une deuxième chambre (B) définissant un deuxième volume interne, ladite deuxième chambre (B) étant positionnée en aval de ladite première chambre (A) et présentant une forme au moins partiellement conique présentant un diamètre minimum situé au niveau de ladite extrémité aval raccordée au dit circuit (200);
   - une hélice (130) comportant plusieurs pales disposées régulièrement autour d'un axe de rotation ; ladite hélice (130) étant positionnée entre ladite première chambre (A) et ladite deuxième chambre (B) ;
   - des moyens de mise en rotation dudit axe de rotation mettant en mouvement ladite hélice (130) ; ledit dispositif étant **caractérisé en ce que** le volume interne de la première chambre (A) est plus grand que le volume interne de la deuxième chambre (B) ; et **en ce que** la forme conique de la première chambre (A) étant **caractérisée par** un angle ($\alpha_A$) et la forme conique de la deuxième chambre (B) étant **caractérisée par** un angle ($\alpha_B$), l'angle ($\alpha_A$) de la forme conique de la première chambre (A) est inférieur à l'angle ($\alpha_B$) de la forme conique de la deuxième chambre (B).

2. Dispositif (100) de mise en circulation d'un gaz dans un circuit fermé (200) selon la revendication précédente **caractérisé en ce que** le rapport entre le volume interne de la première chambre (A) et le volume interne de la deuxième chambre (B) est supérieur ou égal à 2.

3. Dispositif (100) de mise en circulation d'un gaz dans un circuit fermé (200) selon l'une des revendications précédentes **caractérisé en ce que** les moyens de mise en rotation de ladite hélice (130) sont formés par un moteur électrique basse tension.

4. Dispositif (100) de mise en circulation d'un gaz dans un circuit fermé (200) selon l'une des revendications précédentes **caractérisé en ce que** les moyens de mise en rotation de ladite hélice (130) sont positionnés dans le volume interne dudit dispositif.

5. Système de filtration d'un gaz d'un circuit fermé, ledit système étant **caractérisé en ce qu'**il comporte :

   - un dispositif (100) de mise en circulation dudit gaz selon l'une des revendications précédentes ;
   - une chambre (300) comportant un volume de gaz à filtrer ;
   - des tuyauteries de raccord (210, 220) permettant de raccorder ladite chambre (300) au dit dispositif (100) de mise en circulation ;

- un moyen de filtration adapté pour filtrer ledit gaz du circuit.

6. Système de filtration d'un gaz d'un circuit fermé selon la revendication précédente **caractérisé en ce que** ledit moyen de filtration est un filtre permanent adapté pour filtrer ledit gaz dudit circuit.

**Patentansprüche**

1. Vorrichtung (100), um ein Gas in einem geschlossenen Kreislauf (200) in Umlauf zu bringen, wobei die genannte Vorrichtung (100) ein erstes, vorgeschaltetes Ende und ein zweites, nachgeschaltetes Ende aufweist, die geeignet sind, um an den genannten Kreislauf (200) angeschlossen zu werden; wobei die genannte Vorrichtung umfasst:

   - eine erste Kammer (A), die ein erstes internes Volumen definiert und eine wenigstens teilweise konische Form aufweist, die einen Mindestdurchmesser aufweist, der an dem genannten vorgeschalteten, an den genannten Kreislauf (200) angeschlossenen Ende angeordnet ist;
   - eine zweite Kammer (B), die ein zweites internes Volumen definiert, wobei die genannte zweite Kammer (B) der genannten ersten Kammer (A) nachgeschaltet ist und eine wenigstens teilweise konische Form aufweist, die einen Mindestdurchmesser aufweist, der an dem genannten nachgeschalteten, an den genannten Kreislauf (200) angeschlossenen Ende angeordnet ist;
   - einen Propeller (130), der mehrere Blätter umfasst, die regelmäßig um eine Rotationsachse angeordnet sind; wobei der genannte Propeller (130) zwischen der genannten ersten Kammer (A) und der genannten zweiten Kammer (B) positioniert ist;
   - Mittel, um die genannte Rotationsachse zum Rotieren zu bringen, die den genannten Propeller (130) in Bewegung bringt; wobei die genannte Vorrichtung **dadurch gekennzeichnet ist, dass** das interne Volumen der ersten Kammer (A) größer ist als das interne Volumen der zweiten Kammer (B); und dass die konische Form der ersten Kammer (A) durch einen Winkel ($\alpha_A$) gekennzeichnet ist und dass die konische Form der zweiten Kammer (B) durch einen Winkel ($\alpha_B$) gekennzeichnet ist, wobei der Winkel ($\alpha_A$) der konischen Form der ersten Kammer (A) kleiner ist als der Winkel ($\alpha_B$) der konischen Form der zweiten Kammer (B).

2. Vorrichtung (100), um ein Gas in einem geschlossenen Kreislauf (200) in Umlauf zu bringen, gemäß dem voranstehenden Anspruch, **dadurch gekenn-** **zeichnet, dass** das Verhältnis zwischen dem internen Volumen der ersten Kammer (A) und dem internen Volumen der zweiten Kammer (B) größer als oder gleich 2 ist.

3. Vorrichtung (100), um ein Gas in einem geschlossenen Kreislauf (200) in Umlauf zu bringen, gemäß einem der voranstehenden Ansprüche, **dadurch gekennzeichnet, dass** die Mittel, um den genannten Propeller (130) in Rotation zu bringen, durch einen Niedrigspannungs-Elektromotor geformt sind.

4. Vorrichtung (100), um ein Gas in einem geschlossenen Kreislauf (200) in Umlauf zu bringen, gemäß einem der voranstehenden Ansprüche, **dadurch gekennzeichnet, dass** die Mittel, um den genannten Propeller (130) in Rotation zu bringen, in dem internen Volumen der genannten Vorrichtung positioniert sind.

5. Filtersystem eines Gases eines geschlossenen Kreislaufes, wobei das genannte System **dadurch gekennzeichnet ist, dass** es umfasst:

   - eine Vorrichtung (100), um das genannte Gas in Umlauf zu bringen, gemäß einem der voranstehenden Ansprüche;
   - eine Kammer (300), die ein zu filterndes Gasvolumen umfasst;
   - Anschlussrohrleitungen (2100, 220), die das Anschließen der genannten Kammer (300) an die genannte Vorrichtung (100) zum in-den-Umlaufbringen ermöglicht;
   - ein geeignetes Filtermittel, um das genannte Gas des Kreislaufs zu filtern.

6. Filtersystem eines Gases eines geschlossenen Kreislaufs gemäß dem voranstehenden Anspruch, **dadurch gekennzeichnet, dass** das genannte Filtermittel ein geeigneter Dauerfilter zum Filtern des genannten Gases des genannten Kreislaufs ist.

**Claims**

1. A device (100) for circulating a gas in a closed circuit (200), said device (100) having a first upstream end and a second downstream end adapted to be connected to said circuit (200); said device including:

   - a first chamber (A) defining a first inner volume and having an at least partially conical shape having a minimum diameter located at said upstream end connected to said circuit (200);
   - a second chamber (B) defining a second inner volume, said second chamber (B) being positioned downstream of said first chamber (A) and having an at least partially conical shape having a minimum diameter located at said downstream end connected to said circuit (200);
- a propeller (130) including several blades evenly disposed about an axis of rotation; said propeller (130) being positioned between said first chamber (A) and said second chamber (B);
- means for rotating said axis of rotation moving said propeller (130); said device being **characterised in that**:

the inner volume of the first chamber (A) is greater than the inner volume of the second chamber (B); and **in that** the conical shape of the first chamber (A) being **characterised by** an angle ($\alpha_A$) and the conical shape of the second chamber (B) being **characterised by** an angle ($\alpha_B$), the angle ($\alpha_A$) of the conical shape of the first chamber (A) is smaller than the angle ($\alpha_B$) of the conical shape of the second chamber (B).

2. The device (100) for circulating a gas in a closed circuit (200) according to the preceding claim, **characterised in that** the ratio of the inner volume of the first chamber (A) to the inner volume of the second chamber (B) is higher than or equal to 2.

3. The device (100) for circulating a gas in a closed circuit (200) according to one of the preceding claims, **characterised in that** the means for rotating said propeller (130) are formed by a low voltage electric motor.

4. The device (100) for circulating a gas in a closed circuit (200) according to one of the preceding claims, **characterised in that** the means for rotating said propeller (130) are positioned in the inner volume of said device.

5. A system for filtering a gas in a closed circuit, said system being **characterised in that** it includes:

- a device (100) for circulating said gas according to one of the preceding claims;
- a chamber (300) including a volume of gas to be filtered;
- connecting pipings (210, 220) enabling said chamber (300) to be connected to said circulating device (100);
- a filtering means adapted to filter said gas of the circuit.

6. The system for filtering a gas of a closed circuit according to the preceding claim, **characterised in that** said filtration means is a permanent filter adapted to filter said gas of said circuit.

**Fig. unique**

**RÉFÉRENCES CITÉES DANS LA DESCRIPTION**

**Documents brevets cités dans la description**

- US 5187938 A